# EUROPÄISCHE PATENTSCHRIFT

(11) **EP 2 989 219 B1**
(45) Veröffentlichungstag und Bekanntmachung des Hinweises auf die Patenterteilung: **05.12.2018**
(21) Anmeldenummer: 14761631.2
(22) Anmeldetag: 08.09.2014
(51) Int. Cl.: C21D 9/00, B60N 2/68, C21D 1/09, B23P 15/00, C21D 1/30, B23K 26/24

(54) **VERFAHREN ZUM STABILISIEREN UND/ODER ZUR REDUZIERUNG VON INNERHALB DER WANDARTIGEN STRUKTUR AUFTRETENDEN VERSPANNUNGEN MITTELS LASERSCHWEISSEN**
METHOD FOR STABILISING AND/OR FOR REDUCING TENSIONS OCCURRING WITHIN THE WALL-LIKE STRUCTURE BY MEANS OF LASER WELDING
PROCÉDÉ PERMETTANT DE STABILISER ET/OU DE RÉDUIRE AU MOYEN D'UN SOUDAGE LASER LES DÉFORMATIONS SE PRODUISANT À L'INTÉRIEUR D'UNE STRUCTURE DE TYPE PAROI

(30) Priorität: 09.09.2013 DE 102013217969
(43) Veröffentlichungstag der Anmeldung: 02.03.2016
(73) Patentinhaber: Sitech Sitztechnik GmbH, 38442 Wolfsburg (DE)
(72) Erfinder: RUTKOWSKI, Dawid, PL-59-300 Lubin (PL); SULOWSKI, Robert, PL-67-200 Jaczów (PL)
(74) Vertreter: Wöhltjen, Karsten
(86) Internationale Anmeldenummer: PCT/EP2014/069085
(87) Internationale Veröffentlichungsnummer: WO 2015/032944

(56) Entgegenhaltungen:
- WO-A1-99/19164
- DE-B3-102011 101 991

## Beschreibung

Die Erfindung betrifft ein Verfahren zum Stabilisieren einer Rückwandstruktur in einer Sitzstruktur, sowie eine mit dem Verfahren herstellbare Sitzstruktur mit selektiv bestimmten laserverfestigten Bereichen im Bereich einer Rückwand.

Aus der DE 10 2007 024 797 A1 ist ein Verfahren zur Herstellung eines Profilbauteils aus einem Blechhalbzeug bekannt, das zumindest abschnittsweise eine strukturell erhöhte Festigkeit aufweist. Das Blechhalbzeug wird in einem mindestens einstufigen Biegeprozess umgeformt. Der Biegeprozess wird mit nachfolgenden Trenn- und Schneidoperationen des Blechhalbzeugs mit einer thermischen Behandlung mindestens eines räumlich begrenzten Bereichs des Blechhalbzeugs kombiniert. Die thermische Behandlung umfasst mindestens einen Aufheizschritt und einen sich daran anschließenden Abkühlschritt. Der mindestens eine räumlich begrenzte Bereich weist nach der Abkühlung eine strukturell erhöhte Festigkeit auf. Durch das Verfahren können Profilbauteile mit einem offenen, mit einem teilweise offenen oder auch mit einem vollständig geschlossenen Profilquerschnitt und mit gezielt angepassten Härteeigenschaften hergestellt werden. Es ist möglich, ein Profilbauteil herzustellen, das abschnittsweise gehärtete und abschnittsweise nicht gehärtete Bereiche aufweist. Die gehärteten Bereiche können teilgehärtet, vollständig gehärtet oder auch abschnittsweise teilgehärtet und abschnittsweise vollständig gehärtet sein. Beispielsweise erfolgt das Umformen des Profilbauteiles in der DE 10 2007 024 797 A1 durch Walzprofilieren und das Erwärmen lokal definierter Bereiche zum Verfestigen dieser Bereiche erfolgt vor, während oder nach dem Umformen. Aus der WO 99/19164 ist eine Sitzbank für ein Fahrzeug mit einer kippbaren Rücklehne bekannt. Die offenbarte Rücklehne ist in zwei Teilen geteilt, und ohne Verwendung von zusätzlicher Stütz-konstruktion eine hohe Stabilität aufweist.

Die lokale räumliche Erwärmung des Blechhalbzeugs kann vorteilhaft durch induktive Erzeugung eines elektromagnetischen Feldes oder durch einen konduktiven Stromdurchfluss mittels des elektrischen Widerstandes (oder durch eine Kombination dieser beiden Verfahren) - also durch Dissipation elektrischer Energie - erreicht werden. Es besteht in weiteren Ausführungsformen auch die Möglichkeit, dass die Wärme durch eine oder mehrere Laserlichtquellen, durch eine Infrarotstrahlungsquelle oder mittels eines Gasbrenners in definierte Bereiche des Blechhalbzeugs eingebracht wird. Laserlichtquellen haben den Vorteil, dass das von ihnen erzeugte Laserlicht zum Beispiel mit einfachen Mitteln auch auf einen vergleichsweise kleinen räumlich begrenzten Bereich des Blechhalbzeugs fokussiert werden kann, um in diesem Bereich eine lokale Erwärmung auf die gewünschte Temperatur zu bewirken.

Bei dem sogenannten Laserstrahlverfestigen, bei dem zumindest abschnittsweise gehärtete Bereiche in dem Profilbauteil erzeugt werden können, wird ein kohlenstoffhaltiger Stahl für kurze Zeit über die Austenitisierungstemperatur erwärmt und durch rasche Abkühlung in die härtere martensitische Gefügeform umgewandelt. Dabei wird die Wärme über die Absorption der Laserstrahlung an der Oberfläche erzeugt. Die Abschreckung erfolgt durch Wärmeleitung in das Materialinnere. Die Einhärtetiefe beim Laserstrahlverfestigen ist durch Wärmetransport und Selbstabschreckung beschränkt. Den zeitlichen Temperaturverlauf bestimmen im Wesentlichen die Spotgeometrie des Laserstrahls an der Bearbeitungsstelle und die Vorschubgeschwindigkeit des Laserstrahls gegenüber dem Material. Beim Schweißen und Laserstrahlverfestigen oft angewandte Laserquellen sind vor allem der CO₂- und der Nd:YAG-Laser, wobei sich derzeit auch die sich schnell weiterentwickelnden Faserlaser in verschiedenen technischen Bereichen verstärkt durchsetzen.

DE 10 2011 101 700 A1 beschreibt den Einsatz von Laserstrahlverfestigen zur gezielten Beeinflussung des Verformungsverhaltens einer Sitzteilstruktur. Ziel ist es insbesondere im Crashfall, ein Abknicken und Brechen der Sitzstruktur in stark beanspruchten Bereichen einer Rückenlehnenverstellung zu verhindern. Dies soll durch Einbringen von kurzen Lasernähten in diesen Bereichen erzielt werden. Die Lasernähte bewirken durch den oben beschriebenen Prozess lokal in den eingebrachten Bereichen eine Erhöhung der Festigkeit.

Es ist bekannt, dass sich größere Bauteile, wie Bleche, aufgrund des Herstellungsprozesses in einem metastabilen Zustand befinden. Der als "Knackfrosch" bekannte Effekt beschreibt, dass bei relativ geringer Krafteinwirkung auf das Bauteil ein anderer stabiler bzw. metastabiler Zustand eingenommen werden kann. Der häufig von einem Geräusch begleitete Effekt weist auf Spannungen im Bauteil hin. Diese Spannungen induzieren in nachteiliger Weise Instabilitäten des Bauteils.

Der "Knackfrosch-Effekt" tritt insbesondere bei flächigen Bauteilen auf, deren Breite und/oder Länge deutlich größer sind als deren Wandstärke, insbesondere bei den genannten Blechen. Er ist auch bei der Verwendung von Blechen innerhalb des Karosseriebaus und bei der Verwendung von Blechen in Sitzstrukturen bekannt.
Um die Stabilität der Sitzstrukturen zu erhöhen, zielen bekannte Verfahren auf Wandverdickungen ab, um die Bewegungstoleranz der Sitzstruktur zu reduzieren.

Nachteil dieser Verfahren ist allerdings, dass sie kostenintensiv sind und zu einem erhöhten Gewicht des derart veränderten Bauteils führen.

Ein weiterer Ansatz ist die Einprägung von sogenannten Sickenstrukturen. Diese Sickenstrukturen stabilisieren ein flächiges Bauteil, ohne das Gewicht des Bauteiles zu erhöhen.

Der Erfindung liegt nun die Aufgabe zugrunde, ein Verfahren für ein wandartige Struktur bereitzustellen, welches zur Beseitigung oder zumindest zur Reduzierung von Spannungen innerhalb der wandartigen Struktur führt und insbesondere den in wandartigen Strukturen auftretenden "Knackfrosch-Effekt" vermeidet.

Die Aufgabe besteht ferner darin, ein Strukturbauteil zu schaffen, welches als wandartige Struktur im Karosseriebau bzw. innerhalb einer Sitzstruktur eines Fahrzeugsitzes Verwendung findet und welches von dem negativen "Knackfrosch-Effekt" befreit ist.

Es versteht sich, dass - wie erläutert - mit den wandartigen Strukturen flächige Bauteile gemeint sind, die eher eine geringe Wandstärke aufweisen, so dass der "Knackfrosch-Effekt" überhaupt in nachteiliger Weise auftritt.

Insbesondere soll eine Sitzstruktur, insbesondere eine Rückenlehne eines Fahrzeugsitzes oder einer Sitzbank, mit einer wandartigen Struktur ausgerüstet werden, welche kostengünstig ist und zudem das Gewicht der Sitzstruktur nicht erhöht.

Als wandartige Struktur ist beispielsweise auch die Sitzwanne eines Sitzteiles zu betrachten, bei der ebenfalls ein solcher "Knackfrosch-Effekt" vermieden werden soll.

Ausgangspunkt der Erfindung ist ein Verfahren zur gezielten Beeinflussung des Verformungsverhaltens einer wandartigen Struktur, insbesondere einer Rückwandstruktur eines Fahrzeugsitzes, welche in mindestens einem Bereich zumindest abschnittsweise mittels einer Laserlichtquelle erwärmt wird.

Es ist erfindungsgemäß vorgesehen, dass mindestens ein eine Festigkeit und/oder eine Verspannung der wandartigen Struktur beeinflussender Bereich selektiv ausgewählt wird und zur Erhöhung der Festigkeit der wandartigen Struktur und/oder zur Reduzierung von Verspannungen innerhalb der wandartigen Struktur gelasert wird.

Eine spezielle Abkühlung ist innerhalb des Verfahrens nicht notwendig, da die gewünschten charakteristischen Eigenschaften physikalischen Eigenschaften durch Selbstabkühlung der wandartigen Struktur in der gewünschten Art und Weise innerhalb des Materials ausgebildet werden.

Durch die Anwendung des Verfahrens wird in vorteilhafter Weise insbesondere eine Rückwandstruktur eines Fahrzeugsitzes geschaffen, die mindestens einen laserstrahlverfestigten und wie noch erläutert wird einen von Verspannungen reduzierten Bereich aufweist.

Die Erfindung schlägt vor, ein Laserstrahlverfestigen in einer wandartigen Struktur durchzuführen.

Beim Laserstrahlverfestigen werden materialabhängig bei einer vorgebbaren Strahlleistung der Laserquelle in Abhängigkeit von der Einschweißtiefe [in mm] und der Schweißgeschwindigkeit [in m/min] sogenannte Einschweißkurven ermittelt. Diese Einschweißkurven ermöglichen einen Vergleich der verschiedenen einsetzbaren Laserquellen untereinander.

Das Laserstrahlverfestigen wird deshalb auch als Laserstrahleinschweißen bezeichnet, welches in der hier vorgeschlagenen Anwendung nicht dazu dient, Bauteile durch Schweißen miteinander zu verbinden, sondern durch das ein Umschmelzen des Materials in mindestens einem dafür vorgesehenen Bereich der wandartigen Struktur, insbesondere einer Hinterwand/Rückwand der Rückenlehne der Sitzstruktur bewirkt wird.

Das Umschmelzen führt in vorteilhafter Weise in einem ersten Effekt dazu, dass in dem mindestens einen Bereich eine erhöhte Festigkeit des Materials erreicht wird.

Das Umschmelzen führt in vorteilhafter Weise in einem zweiten Effekt dazu, dass in dem mindestens einen Bereich eine Reduzierung von Verspannungen innerhalb des Materials erreicht wird.

In der Wärmeeinflusszone der resultierenden Laserschweißspuren wurde bei höherkohlenstoffhaltigen Stählen Martensitbildung ähnlich dem klassischen Härten ermittelt. Das Nahtgefüge der niedrig gekohlten Stähle bleibt ferritisch, die Festigkeitssteigerung erfolgt durch den "Abschreckalterungsvorgang", bei dem der Kohlenstoff infolge rascher Abkühlung teilweise im α-Gitter in übersättigter Lösung verbleibt und eine Erhöhung des Formänderungswiderstandes bewirkt.
Die Vorteile der Anwendung des Verfahrens bestehen darin, dass das Laserstrahlhärten zu einer lokalen Steigerung der Festigkeit, besonders der Dehngrenze in den gehärteten Bereichen der Sitzstruktur führt.
Je nach Werkstoff tritt eine Steigerung der Dehngrenze zwischen 4 % und 12 % ein.
Die gesteigerte lokale Festigkeit in der Hinterwand/Rückwand der Rückenlehne der Sitzstruktur führt zu einer erhöhten Energieaufnahme im Crashfall von ca. 10 %.
Von besonderem Vorteil ist ferner, dass durch Laserstrahlhärten auch Stahlteile, insbesondere gleichartige wandartige Strukturen mit geringerem Kohlenstoffgehalt gehärtet werden können. Das erfindungsgemäße Verfahren wählt in vorteilhafter Weise selektiv Bereiche auf einer Rückwandstruktur aus, in denen eine Laserverfestigung die für den "Knackfrosch-Effekt" verantwortliche Bewegung des Bauteils reduziert oder sogar unterbindet. Auf die Kriterien, die der selektiven Auswahl der Bereiche zu Grunde liegen, wird nachfolgend noch näher eingegangen.
Die Durchführung des Verfahrens kann in bevorzugten Ausgestaltungen der Erfindung in verschiedenen Schritten durchgeführt werden, deren Reihenfolge variabel ausgestaltet werden kann, wobei nach Nennung der relevanten Verfahrensschritte eine bevorzugte Ausgestaltungsvariante erläutert wird.

In der Erfindung wird die wandartige Struktur mit einer Haltestruktur verbunden, wobei das Lasern wahlweise vor, nach oder während einem Verbinden, insbesondere einem Verschweißen, mit der Haltestruktur durchgeführt wird.

Die Haltestruktur ist beispielsweise ein nahe der Außenkontur der wandartigen Struktur umlaufender profilierter Rahmen, der gemeinsam mit der wandartigen Struktur beispielsweise die Rückenlehnenstruktur der Rückenlehne eines Fahrzeugsitzes bildet.
Durch die Haltestruktur bekommt die Rückenlehnenstruktur in vorteilhafter Weise zusätzlich eine erhöhte Stabilität, die für Sitzstrukturen eines Fahrzeugsitzes notwendig ist.

In der Erfindung wird vor oder nach einem Verschweißen, mit der Haltestruktur eine Erhebungen und Vertiefungen aufweisende Sickenstruktur in die wandartige Struktur eingeprägt.
In bevorzugter Ausgestaltung der Erfindung verlaufen die Erhebungen und Vertiefungen der Sickenstruktur linienförmig in der wandartigen Struktur.
Die linienförmigen Erhebungen und Vertiefungen werden in bevorzugten Ausgestaltungen als Geraden und/oder als Kurven in die wandartige Struktur eingebracht. Die Auswahl hängt von der Fläche beziehungsweise der Wanddicke der wandartigen Struktur ab. In der Praxis sind ferner innerhalb der wandartigen Struktur Öffnungen oder dergleichen angeordnet, so dass die technologisch einfacher einzubringenden Geraden Erhebungen und Vertiefungen durch als Kurven eingebrachte Erhebungen und Vertiefungen ersetzt oder ergänzt werden. Die Erläuterung macht deutlich, dass die Ausbildung der Sickenstruktur in vorteilhafter Weise sehr variabel ausgestaltet werden kann.
Das Verfahren zeichnet sich insbesondere dadurch aus, dass das Lasern wahlweise vor oder nach dem Einbringen der Erhebungen und Vertiefungen aufweisenden Sickenstruktur durchgeführt wird.
In der erwähnten bevorzugten Ausgestaltungsvariante wird wie folgt vorgegangen.
In einem ersten Schritt wird die Sickenstruktur in die wandartige Struktur eingebracht. Bei der Einbringung der Sickenstruktur kommt es in vorteilhafter Weise zu einer gewünschten Erhöhung der Stabilität in der wandartigen Struktur. Andererseits entstehen beim Prägen der Sickenstruktur innerhalb des Materials Verspannungen, die ursächlich für den "Knackfrosch-Effekt" sind.

In einem zweiten Schritt erfolgt die Verbindung mit der Haltestruktur, insbesondere mit dem genannten Profilrahmen. Wie erläutert, wird damit die Stabilität des die Sickenstruktur aufweisenden Zusammenbauteils aus wandartiger Struktur und Haltestruktur in vorteilhafter Weise noch weiter erhöht.

Bei dem Verbinden, insbesondere dem Verschweißen der wandartigen Struktur und der Haltestruktur kommt es durch die Wärmeeintrag beim Verschweißen ebenfalls dazu, dass sich die wandartige Struktur innerhalb der Haltestruktur verspannt, so dass auch dadurch die Gefahr besteht, dass der "Knackfrosch-Effekt" in der wandartigen Struktur initiiert wird.

Die beschriebene Vorgehensweise hat jedoch den Vorteil, dass die Sickenstruktur der wandartigen Struktur auch in dem Bereich ausgebildet werden kann, in dem die Haltestruktur angebracht wird. Die Haltestruktur wird nämlich auf die Fläche der wandartigen Struktur derart aufgeschweißt, so dass die Sickenstrukturen unterhalb der Auflagefläche der Haltestruktur angeordnet sind.

Diese Ausgestaltung hat den Effekt, dass das Zusammenbauteil aus wandartiger Struktur und Haltestruktur mit einer bis in den Randbereichen der Haltestruktur geführter Sickenstruktur besonders stabil ist.

Wie erläutert, ist es in dem zweiten Schritt auch möglich, die wandartige Struktur zuerst mit der Haltestruktur zu verbinden und in einem sich anschließenden dritten Schritt eine Sickenstruktur einzubringen. In diesem Fall kann jedoch unterhalb der Haltestruktur keine Sickenstruktur mehr eingebracht werden, wodurch der zuvor erläuterte Effekt der besonderen Stabilität verloren geht.

In dem dritten Schritt wird schließlich in der wandartigen Struktur mindestens eine Lasernaht in den dafür ausgewählten selektiven Bereich der wandartigen Struktur eingebracht.

Dieser ausgewählte selektive Bereich ist anders gesagt ein lokalisierbarer partieller Bereich der wandartigen Struktur, der eine höhere Festigkeit erhalten soll und in dem in vorteilhafter Weise auftretende Verspannungen reduziert werden sollen beziehungsweise reduziert werden, so dass kein "Knackfrosch-Effekt" mehr auftritt.

Die Auswahl des Bereiches erfolgt in Abhängigkeit der Abmessung und/oder der Wandstärke der wandartigen Struktur und/oder in Abhängigkeit der Höhe der Erhebungen und/oder der

Tiefe der Vertiefungen und/oder der geometrischen Ausgestaltung der Sickenstruktur in der wandartigen Struktur und/oder in Abhängigkeit der geometrischen Ausbildung der Haltestruktur.

Die Beachtung der genannten Parameter führt zu einer zielgenaueren Festlegung der Anordnung der Sickenstruktur und/oder der Anordnung der Lasernahtstruktur und/oder der Auswahl der Schweißparameter.

In bevorzugter Ausgestaltung der Erfindung ist vorgesehen, dass in die wandartige Struktur mindestens eine Lasernaht oder eine Lasernahtstruktur aus mehreren Lasernähten eingelasert wird, wobei die mindestens eine oder die mehreren Lasernähte der Lasernahtstruktur (passend zu der Sickenstruktur) als Geraden und/oder Kurven linienförmig verlaufend eingebracht werden.

In einer Ausführungsform ist es bevorzugt, dass die Lasernähte auf den Erhebungen und/oder in den Vertiefungen der wandartigen Struktur horizontal und/oder vertikal eingelasert werden. Eine solche Ausführungsform ist in dem nachfolgenden Beschreibungsteil als Ausführungsbeispiel näher erläutert.

In anderen bevorzugten Ausführungsformen, die im nachfolgenden Beschreibungsteil nicht näher erläutert werden, ist es vorgesehen, dass die Erhebungen und/oder Vertiefungen der wandartigen Struktur bezüglich einer gedachten Horizontalen der wandartigen Struktur schräg ausgebildet werden. Analog dazu wird die mindestens eine Lasernaht oder die Lasernähte bezogen auf diese gedachte Horizontale ebenfalls schräg in der wandartigen Struktur auf den Erhebungen und/oder in den Vertiefungen eingelasert.

Es versteht sich, dass die wandartige Struktur somit eine Sickenstruktur aufweisen kann, die sowohl aus vertikalen und horizontalen sowie schräg angeordneten Erhebungen und/oder Vertiefungen ausgebildet ist. Auf den Erhebungen beziehungsweise in den Vertiefungen ist/sind dann erfindungsgemäß die mindestens eine Lasernaht oder die Lasernähte eingelasert.

In dem nachfolgend beschriebenen Ausführungsbeispiel ist die Sickenstruktur aus vertikalen und horizontalen Erhebungen und Vertiefungen ausgebildet, die orthogonal zueinander angeordnet sind. Die Erfindung ist jedoch nicht auf diese Ausführungsform beschränkt, da die Erhebungen und Vertiefungen der Sickenstruktur innerhalb der wandartigen Struktur gegenüber der gedachten Horizontalen der wandartigen Struktur auch in einem vorgebbaren Winkel zueinander angeordnet sein können. Die mindestens eine Lasernaht beziehungsweise die Lasernähte verlaufen dann nicht in den vertikalen und horizontalen Erhebungen, sondern sind auch auf beziehungsweise in den schräg gegenüber der gedachten Horizontalen angeordneten Erhebungen und Vertiefungen eingelasert.

Mit anderen Worten wurde herausgefunden, dass die Laserverfestigung in besonders vorteilhafter Weise in selektiv ausgewählten Bereichen erst nach einem Verschweißen der Rückwandstruktur mit einer Haltestruktur, insbesondere einem Profilrahmen, durchgeführt wird.

Der bei der Verschweißung der beiden Bauteile gegebenenfalls entstehende Verzug wird in vorteilhafter Weise durch die Einbringung von mindestens einer Lasernaht reduziert, sobald die Bauteile miteinander verschweißt worden sind.

Durch die Einbringung der mindestens einen Lasernaht und durch die Reduzierung des Verzuges wird in vorteilhafter Weise ein Zusammenbauteil geschaffen, welches stabiler ist und keinen "Knackfrosch-Effekt" aufweist. Die Reduzierung der Spannungen führt insgesamt zu einem reduzierten Verzug der wandartigen Struktur und somit zu einem stabileren Bauteil, insbesondere "bezogen auf die Neigung der wandartigen Struktur zur plötzlichen Verbiegung aus der Ebene der wandartigen Struktur" ="Knackfrosch-Effekt"].

Das Einbringen der mindestens einen Lasernaht zusammen mit der Verschweißung der Haltestruktur mit der wandartigen Struktur ist von besonderem Vorteil, da diese Schritte in dem gleichen Werkzeug gleichzeitig oder kurz miteinander durchgeführt werden können. Es entfallen Transportkosten von einem Werkzeug zu einem anderen Werkzeug und durch den Wegfall eines Werkzeuges sowie der Transportmittel werden Kosten eingespart und die Herstellungszeit wird reduziert.

Das Einbringen der Sickenstruktur in die wandartige Struktur, insbesondere das Prägen der Sickenstruktur, erfolgt also in vorteilhafter Weise vor dem Verschweißen der Rückwandstruktur mit der Haltestruktur.

In bevorzugter Ausgestaltung der Erfindung werden horizontal und vertikal verlaufende Sicken in den ausgewählten Bereichen in einigen Ausführungsbeispielen über die gesamte Fläche der wandartigen Struktur, insbesondere der Rückwandstruktur, geführt.

Eine zuvor vorgenommene Verschweißung der Haltestruktur mit der Rückwandstruktur würde eine Prägung im Sinne einer Versickung der Rückwandstruktur im Bereich der Haltestruktur verhindern. Die Stabilisierung könnte also nur im Inneren der Haltestruktur erreicht werden.

Ein Vorteil des nachträglichen Einbringens der Lasernahtstruktur in die Rückwandstruktur besteht darin, dass durch die Einbringung der Sickenstruktur und durch den Verschweißvorgang beim Verbinden der Rückwandstruktur mit der Haltestrukturinduzierte Spannungen im Material nachträglich durch das anschließende Laserschweißen reduziert werden können.

Die sich innerhalb des Verfahrens ausbildende wandartige Struktur wird im Detail in der Beschreibung näher erläutert.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figuren 1a, 1b: einen Verlauf von Lasernähten auf einer Rückwandstruktur eines Fahrzeugsitzes in einer ersten Ausgestaltung der Erfindung;
- Figur 2a: einen Fahrzeugsitz mit einem Sitzteil und einem Rückenlehnenteil, wobei das Rückenlehnenteil eine wandartige Struktur mit einer Haltestruktur aufweist;
- Figur 2b, 2c, 2d: Lasernahtstrukturen in weiteren Ausgestaltungen der Erfindung;
- Figur 3a, 3b: eine bevorzugte Ausführungsvariante der Anordnung einer Haltestruktur an einer Rückwandstruktur und darauf angeordnet eine Sickenstruktur sowie eine Lasernahtstruktur;
- Figur 4: das Verhältnis zwei ausgewählter Parameter beim Laserschweißprozess zur Erzeugung von Verfestigungslinien auf einer wandartigen Struktur, Rückwandstruktur.

Im Folgenden beziehen sich die Begriffe horizontal (von links nach rechts) und vertikal (von oben nach unten) insbesondere auf den Verlauf von Lasernähten 21, 22 und Sicken 11, 12 in der Ebene der Rückwandstruktur in Bezug auf die Lage der in den Figuren dargestellten Rückwandstruktur 10.

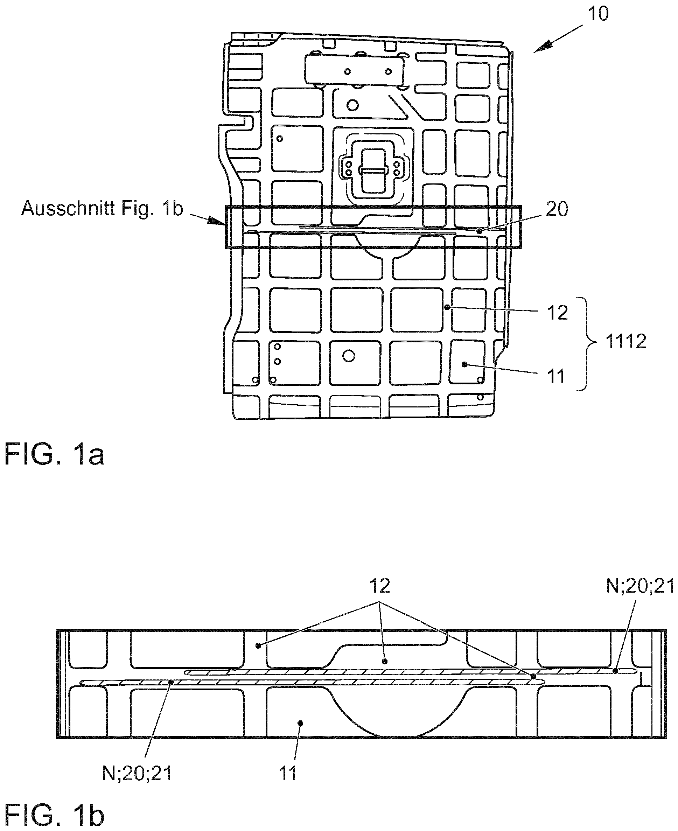

Figur 1a zeigt exemplarisch die von der Polsterung abgewandte Seite einer Rückwandstruktur 10 eines Fahrzeugsitzes F oder einer Sitzbank oder einer aus mehreren Fahrzeugsitzen F bestehenden Sitzbank in einem Kraftfahrzeug.

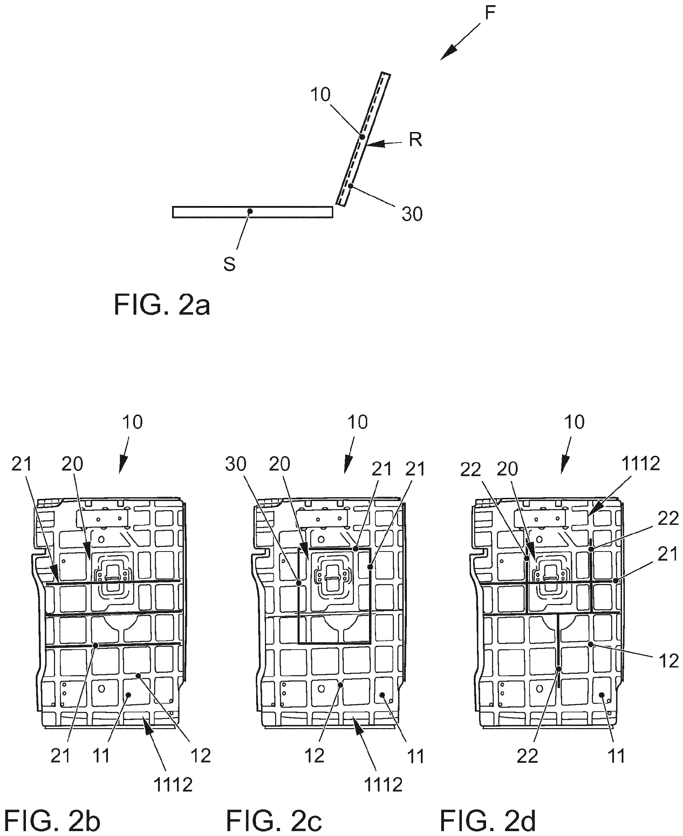

Einen schematisch dargestellten Fahrzeugsitz F zeigt Figur 2a.

Er umfasst ein Sitzteil S und eine Rückenlehne R, wobei die wandartige Struktur eine Rückwandstruktur 10 des Rückenlehnenteiles R ist. Die Rückwandstruktur 10 ist mit einer Haltestruktur 30, insbesondere einem Profilrahmen, verbunden.

Die Erfindung wird anhand dieser Rückwandstruktur 10, die mit der Haltestruktur 30 verbunden ist, näher erläutert.

In Figur 1a ist eine in das Blech der Rückwandstruktur 10 eingeprägte Sickenstruktur 1112 sichtbar.

De Sickenstruktur 1112 verläuft sowohl vertikal als auch horizontal.

Die Erhebungen 11 und die Vertiefungen 12 der Sickenstruktur sind im Ausführungsbeispiel innerhalb der Rückwandstruktur 10 orthogonal zueinander angeordnet.

Im linken oberen Randbereich, im rechten unteren Randbereich und im mittleren oberen Bereich sind Aussparungen für Gurtbefestigung, Lehnenverstellung und Befestigung der Rückwandstruktur 10 gezeigt.

In einem selektierten mittleren Bereich verlaufen parallel zueinander zwei horizontale Lasernähte 21, die linienförmig in die Rückwandstruktur 10 eingebracht sind.

Im Ausgangsbeispiel verlaufen die horizontalen Lasernähte 21 nahezu über die gesamte Breite der Rückwandstruktur 10.

Eine Detailvergrößerung der Rückwandstruktur 10 zeigt Figur 1b.

Durch die Vergrößerung wird sichtbar, dass die Erhebungen 11 und Vertiefungen 12 der Sickenstruktur 1112 jeweils bis nah an den seitlichen Rand der Rückwandstruktur 10 eingebracht sind.

Des Weiteren zeigt Figur 1b, dass zwei horizontale Lasernähte 21 (schraffiert dargestellt) von einem Randbereich bis über den mittleren Bereich der Rückwandstruktur 10 geführt sind. Im mittleren Bereich der Rückwandstruktur 10 sind zwei horizontale Lasernähte 21 in einem geringen Abstand zueinander übereinander angeordnet.

Durch die Anordnung der beiden Lasernähte 21 kommt es in einem selektiv ausgewählten Bereich zur Verfestigung der Rückwandstruktur 10, wobei die Lasernähte 21, 22 in bevorzugter Ausgestaltung der Erfindung innerhalb der Erhöhung 11 der Sickenstruktur 1112 angeordnet sind. Dort entfalten sie die nachfolgend beschriebenen Effekte, wie Versuche ergeben haben, sehr wirkungsvoll.

Der selektiv ausgewählte Bereich der Lasernahtstrukturen wurde in diesem Ausführungsbeispiel gezielt über die gesamte Breite der Rückwandstruktur 10 gewählt.

Diese Anordnung führt dazu, dass die Rückwandstruktur 10 über die gesamte Breite verfestigt wird.

Die Verfestigung ist im mittleren Bereich durch die übereinanderliegende Anordnung der beiden horizontalen Lasernähte 21 am größten, so dass in diesem mittleren Bereich vorliegende größere Verspannungen der Rückwandstruktur 10 vermieden werden.

Durch die übereinanderliegende Anordnung der beiden horizontalen Lasernähte 21 wird durch die Laserverfestigung in diesem Bereich in vorteilhafter Weise zum einen die Festigkeit, insbesondere die Biegefestigkeit der Rückwandstruktur 10 in der Mitte der Rückwandstruktur verstärkt.

Zum anderen erfolgt hier zweimalig durch Einbringen von Wärme von zwei sehr nah beieinander liegenden Lasernähten 21 ein Wärmeeintrag des kritischen, weil verspannten Bereiches der Rückwandstruktur 10.

Dieses Erwärmen durch die Laserlichtquelle führt in vorteilhafter Weise im selektierten Bereich zu einem Entspannen der Materialstruktur der dargestellten Rückwandstruktur 10.

Bevorzugt werden die Laserverfestigungslinien mittig und/oder randständig in einer im selektiv ausgewählten Bereich verlaufenden Sickenstruktur 1112 eingebracht.

Die stabilisierenden Effekte von Sickenstruktur 1112 und Lasernahtstruktur 20 durch die Laserverfestigung verstärken sich dadurch gegenseitig.

Es ist vorgesehen, dass die Erhebungen 11 und Vertiefungen 12 der Sickenstruktur 1112 innerhalb der Rückwandstruktur 10 und die horizontalen und vertikalen Lasernähte 21, 22 innerhalb der Rückwandstruktur 10 jeweils orthogonal zueinander angeordnet sind.

In einer besonderen Ausgestaltung der Erfindung sind auf einer Rückwandstruktur 10 eine Sickenstruktur 1112 sowie mehrere Lasernahtstrukturen 20 angeordnet.

Besonders bevorzugt bilden diese mehreren Lasernahtstrukturen 20 geometrische Formen, insbesondere zueinander parallele Lasernähte, die in rechten Winkeln zueinander angeordnet sind, insbesondere Rechtecke.

Weitere mögliche Anordnungen von Sickenstrukturen 1112 und zugehörigen Lasernahtstrukturen 20 sind in einer beispielhaften Auswahl von drei möglichen Ausgestaltungsvarianten in den Figuren 2b bis 2d dargestellt und werden nachfolgend beschrieben.

Gezeigt sind drei schematische Darstellungen von Rückwandstrukturen 10 gemäß Figur 1.

Figur 2b zeigt in einer ersten Ausgestaltungsvariante drei zueinander parallele übereinanderliegende horizontale Lasernähte 21 als Lasernahtstruktur 20, die jeweils über die gesamte Breite der Rückwandstruktur 10 verlaufen und in je einer horizontal verlaufenden Vertiefung 12 (Sickenvertiefung) der Sickenstruktur 1112 angeordnet sind.

Figur 2c zeigt in einer zweiten Ausgestaltungsvariante eine Lasernahtstruktur 20, die durch Laserverfestigung eingebracht ist. Sie ist im zentralen Bereich Rückwandstruktur 10 angeordnet und ist als Rechteck aus zwei zueinander parallel verlaufenden horizontalen Lasernähten 21 und zwei dazu senkrechten und ebenfalls zueinander parallel verlaufenden vertikalen Lasernähten 22 ausgeführt. Die horizontalen und vertikalen Lasernähte 21, 22 haben ihren Anfangs- und Endpunkt jeweils an einem Schnitt- beziehungsweise Berührungspunkt zweier Linien.

Über die Schnittpunkte hinaus führen die horizontal verlaufenden Laserverfestigungslinien 21 in einer dritten Ausgestaltungsvariante gemäß Figur 2d. Sie bilden gemeinsam mit den vertikal verlaufenden Lasernähten 22 ebenso wie in Figur 2c ein Rechteck, welches nahe des Zentrums der Rückwandstruktur 10, jedoch im oberen mittigen Bereich der Rückwandstruktur 10 ist.

Jedoch stellen die Berührungspunkte der vertikalen Lasernähte 22 mit der unteren horizontalen Lasernaht 21 den Anfangspunkt der vertikalen Laserverfestigungslinien 21 dar.

Die in Figur 2d dargestellte Struktur 20 durch Laserverfestigung allein beziehungsweise in Kombination mit der dargestellten Sickenstruktur 1112 stellt eine besonders bevorzugte Ausgestaltungsvariante dar, weil festgestellt worden ist, dass sich kreuzende Lasernähte 21, 22 der Lasernahtstruktur 20 besonders vorteilhaft auf die Gesamtfestigkeit der Rückwandstruktur 10 und auf die Reduzierung von Verspannungen in der Rückwandstruktur 10 auswirken.

Allen in Figur 2b bis 2d dargestellten möglichen Ausgestaltungsvarianten der Erfindung ist gemeinsam, dass sie selektiv ausgewählte Bereiche der Rückwandstruktur 10 verfestigen.

Die Anordnung der Lasernähte 21, 22 bewirkt durch ihre Lage, vorzugsweise auf den Erhebungen 11 der Sickenstruktur 1112, Länge und/oder Anordnung zueinander innerhalb der Rückwandstruktur 10, eine verfestigende Wirkung auf die gesamte Rückwandstruktur 10.

Die Anordnung der Lasernähte 21, 22 in den Vertiefungen 12 der Sickenstruktur 1112 ist erfindungsgemäß ebenfalls denkbar.

Die Lasernähte 21, 22 sind insbesondere in einer bevorzugten Ausgestaltung der Erfindung parallel zu der Innenkontur der Haltestruktur 30, das heißt parallel zur Innenkontur des Profilrahmens verlaufend angeordnet. Diese Ausgestaltung ist besonders vorteilhaft, da Wirklinien der Haltestruktur 30 parallel zu den Wirklinien der Lasernähte 21, 22 verlaufen.

Insbesondere die Biegefestigkeit der Rückwandstruktur 10 wird dadurch stark erhöht.

Darüber hinaus sind zumindest jeweils einige der horizontalen und vertikalen Lasernähte 21, 22 so angeordnet, dass sie während des Verfestigungsprozesses das Material in selektierten Bereichen durch eine Laserlichtquelle erwärmen. Die selektierten Bereiche werden dahin gehend ausgewählt, dass die Bereiche mit Wärme behandelt werden, die sich durch unerwünschte Spannungen auszeichnen, wobei diese Spannungen im Zuge des Erwärmens durch das Laserschweißen reduziert werden.

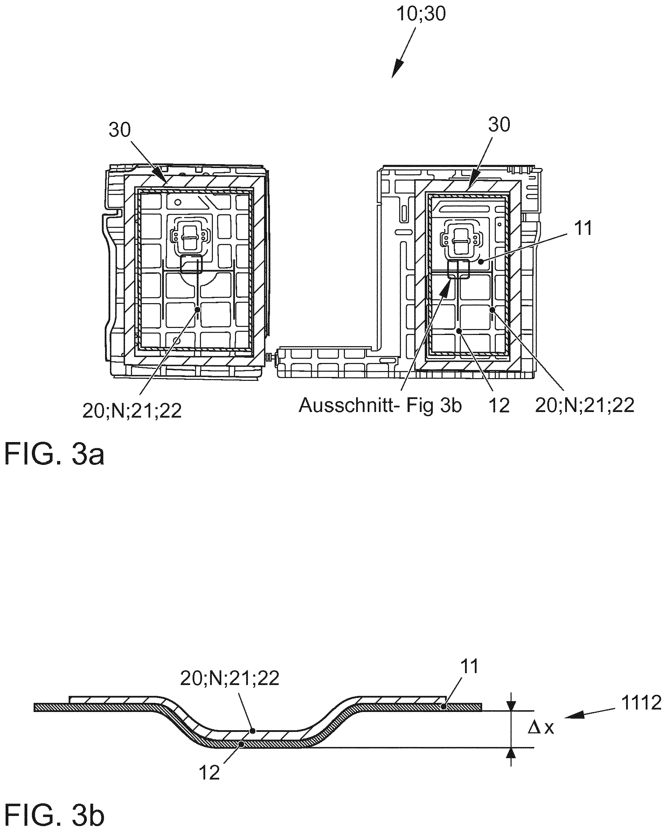

In einer in den Figuren 3a und 3b dargestellten bevorzugten Ausgestaltung der Erfindung ist vorgesehen, dass die Lasernahtstruktur 20 innerhalb der Haltestruktur, insbesondere des Profilrahmens 30, angeordnet ist.

Figur 3a zeigt dabei schematisch zwei miteinander verbundene Rückwandstrukturen 10 auf der von einer Polsterung abgewandten Seite.

Wie in den Figuren 1a, 1b und 2b bis 2d ist eine Sickenstruktur 1112 eingebracht, die im dargestellten Ausführungsbeispiel durch eine Sickenprägung erzeugt wurde.

Die eingebrachte Lasernahtstruktur 20 durch Laserverfestigung entspricht dem Ausführungsbeispiel gemäß Figur 2d.

Der Unterschied zwischen Figur 2c und 3a liegt darin, dass die Rückwandstruktur 10 im Ausführungsbeispiel gemäß Figur 3a mit dem Profilrahmen 30 als Haltestruktur verbunden ist.

An dieser Stelle wird erwähnt, dass auch andere Profilrahmen, die nur eine obere und untere gegenüberliegende oder eine links und rechts gegenüberliegend angeordnete Haltestruktur 30 aus Profilen aufweisen, mit der Rückwandstruktur 10 verbunden werden können. Wie erläutert, sind die Sickenstrukturen 1112 beziehungsweise die Lasernahtstrukturen 20 dieser veränderten Haltestruktur 30 angepasst, das heißt, es werden gegebenenfalls andere geometrische Anordnungen für die Lasernahtstrukturen 20 ausgebildet, die hier nicht näher beschrieben worden sind.

Die Lasernahtstruktur 20 durch Laserverfestigung liegt bei diesem Ausführungsbeispiel innerhalb der Haltestruktur 30, das heißt, die Lasernähte N; 21, 22 führen nicht über die Innenkontur der Haltestruktur 30 hinaus.

Es wird in den Figuren 3a, 3a insbesondere verdeutlicht, dass die Sickenstruktur 1112 in dem Auflagebereich des Profilrahmens 30 an der Rückwandstruktur ausgebildet ist und sogar die Außenkontur des Profilrahmens 30 umlaufend überragt, wodurch die Sickenstruktur außerhalb des Profilrahmens 30 sichtbar ist.

Es wurde bereits erläutert, dass diese Anordnung möglich ist, da die Sickenstruktur 1112 vor der Befestigung des Profilrahmens 30 an der Rückwandstruktur 10 eingebracht worden ist.

In einer Schnittdarstellung durch die Rückwandstruktur 10 wird innerhalb der Figur 3b die Sickenstruktur 1112, insbesondere eine Vertiefung 12 (Sickenvertiefung) und dazu eine Erhöhung 11 (Sickenerhöhung) in der wandartigen Struktur gezeigt. Zwischen Vertiefung und Erhöhung ist beispielsweise ein Abstand Δx von 2 mm ausgewählt. Die Wandstärke der Rückwandstruktur 10, also des Bleches, beträgt beispielsweise circa 0,5 mm.

Dargestellt ist der alternative Verlauf einer analog zu Figur 1b schraffiert dargestellten Lasernaht N; 21, 22, die anders als in den vorhergehenden Figuren 1a, 1b, 2b, 2C, 2d orthogonal zur der Vertiefung 12 verläuft und einseitig auf eine angrenzende Erhebung 11 der Sickenstruktur 1112 oder wie in Figur 3b dargestellt beidseitig auf je eine angrenzende Erhebung 11 der Sickenstruktur 1112 aufläuft.

Durch diesen orthogonalen Verlauf kann ebenfalls in vorteilhafter Weise gewährleistet werden, dass sich die verfestigenden Effekte aus Sickenstruktur 1112 und Lasernahtstruktur 20 durch Laserverfestigung überlagern und noch weiter verstärken, so dass der "Knackfrosch-Effekt" vermieden wird.

Die jeweilige horizontale beziehungsweise vertikale Lasernaht N; 21, 22 verläuft bei dieser Ausgestaltung orthogonal zu mindestens einer der Vertiefungen 12 auf mindestens einer Erhebung 11 oder eben über die mindestens eine Erhebung 11 hinaus zur nächsten Vertiefung 12, in der sich die jeweilige horizontale beziehungsweise vertikale Lasernaht N; 21, 22 fortsetzt und die jeweilige Vertiefung 12 wiederum orthogonal kreuzt.

Das orthogonale Kreuzen einer oder mehrerer Vertiefung/en 12 beziehungsweise einer oder mehrerer Erhebung/en 11 einer Lasernaht oder mehrerer Lasernähte N; 21, 22 wie in der Figur 3b dargestellt, stellt jedoch ebenfalls nur eine Ausführungsvariante dar.

In anderen Ausführungsvarianten ist es auch vorgesehen, dass eine oder mehrere Lasernähte N; 21, 22 eine oder mehrere Vertiefung/en 12 beziehungsweise eine oder mehrere Erhebung/en 11 nicht orthogonal, sondern in einem vorgebbaren Winkel kreuzen. Die eine oder die mehreren Lasernähte N; 21, 22 verlaufen somit bei diesen Ausführungsvarianten nicht in den Vertiefungen 12 und/oder auf den Erhebungen 12, sondern kreuzen die Vertiefungen 12 und/oder Erhebungen 12 in einem vorgebbaren Winkel, vorzugsweise orthogonal.

Der bereits erwähnte Verlauf der Sickenstruktur 1112 über die Haltestruktur 30 hinaus, das heißt unterhalb der Haltestruktur 30 ermöglicht bei jeder der Ausgestaltungen in vorteilhafter Weise eine Stabilisierung der randseitig über die Haltestruktur 30 überstehenden Bereiche der Rückwandstruktur 10.

Zu diesem Zweck ist es erforderlich, die Sickenstruktur 1112 wie erläutert vor dem Verschweißen der Rückwandstruktur 10 mit dem Profilrahmen 30 anzuordnen.

Die Lasernahtstruktur 20 wird in der bevorzugten Verfahrensweise nach dem Verschweißen mit dem Profilrahmen 30 eingebracht.

Der beim Schweißvorgang bei dem Verbinden des Profilrahmens 30 mit der Rückwandstruktur 10 und/oder bei der Einbringung der Sickenstruktur 1112 nicht vollständig zu vermeidende Verzug ist innerhalb der Innenkontur des Profilrahmens am stärksten, da es sich um einen geschlossenen Bereich handelt, der keine Entspannung in eine der in der Ebene der Rückwandstruktur 10 liegenden Richtungen ermöglicht. Der Verzug kann sich somit nur orthogonal zu der Ebene entspannen, wodurch der "Knackfrosch-Effekt" auftritt, der in vorteilhafter Weise mit dieser Erfindung jedoch vermieden wird.

Das Einbringen einer Lasernahtstruktur 20 durch Laserverfestigung führt durch das erfindungsgemäße Verfahren zwingend zu einer Erwärmung kritischer Bereiche und somit zu einer Reduzierung des Verzugs. Zudem werden die laserverfestigten Bereiche gehärtet und verfestigen durch die Wahl der Anordnung der Lasernahtstruktur 20 durch Laserverfestigung den gesamten Bereich im Inneren der Haltestruktur 30. Die Summe der beschriebenen Effekte macht das Auftreten eines sogenannten "Knackfrosch-Effekts" nahezu unmöglich.

Über die Anordnung der Lasernahtstruktur 20 durch Laserverfestigen hinaus sind die Parameter beim Einbringen der Struktur maßgeblich für die Kombination aus Verfestigen und Entspannen der gesamten Rückwandstruktur.

Maßgebliche verfahrenstechnische Schweißparameter sind dabei die Art der Laserquelle, die Leistung der Laserquelle, der Brennfleckdurchmesser beziehungsweise Defokus, die Laserverfahrgeschwindigkeit (Vorschubgeschwindigkeit v) sowie Tiefe E und Breite der Verfestigungsspur.

Eine mögliche Kombination sieht vor, einen Nd: YAG Laser (Art der Laserquelle) mit 4 kW Brennleistung und einem Defokus von 30 mm zu betreiben.

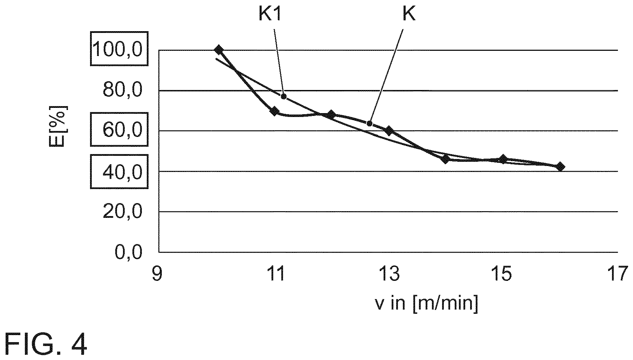

Figur 4 zeigt den Einfluss der Verfahr- beziehungsweise Vorschubgeschwindigkeit v eines derartigen Lasers auf die Einschweißtiefe E bei der Laserverfestigung eines beispielhaft genannten Werkstoffs HC300X in 0,5 mm Wandstärke anhand einer Kennlinie K und einer zugehörigen interpolierten Kennlinie K1.

Um die beschriebenen positiven und gewünschten Eigenschaften des erfindungsgemäßen Verfahrens zu bewirken, darf insbesondere kein Durchbrand (E=100 %) durch das jeweilige Material verursacht werden.

Die Lasernahtstruktur 20 kann auf einer Seite oder auf beiden Seiten der Rückwandstruktur 10 eingebracht werden.

Die Rückwandstruktur 10, die nach dem erfindungsgemäßen Verfahren gelasert wurde, weist somit auf mindestens einer Seite oder auf beiden Seiten mindestens eine Lasernaht N; 21, 22 auf.

Für ein optimales Ergebnis sollte eine Mindesteinbrandtiefe von E=50 % erzeugt werden.

Bei einer beidseitigen Laserverschweißung sind die Lasernähte N; 21, 22 in unterschiedlichen Bereichen auszubilden, da es sonst gegebenenfalls doch zu einem Durchbrand der Lasernähte 21, 22 kommt.

### Bezugszeichenliste

- 10: Rückwandstruktur
- 1112: Struktur (Sickenstruktur)
- 11: Erhebung (Sickenerhöhung)
- 12: Vertiefung (Sickenvertiefung)
- N: Lasernaht
- 20: Lasernahtstruktur
- 21: horizontal verlaufende Lasernaht
- 22: vertikal verlaufende Lasernaht
- 30: Haltestruktur (Profilrahmen)
- F: Fahrzeugsitz
- S: Sitzteil
- R: Rückenlehnenteil
- Δx: Abstand
- K: Kennlinie
- K: interpolierte Kennlinie
- E: Einschweißtiefe
- v: Geschwindigkeit

## Patentansprüche

1. Verfahren zur gezielten Beeinflussung des Verformungsverhaltens einer wandartigen Struktur (10), **dadurch gekennzeichnet, dass** die wandartige Struktur (10) mit einer Haltestruktur (30) verschweißt wird, wobei in die wandartige Struktur (10) vor oder nach dem Verschweißen mit der Haltestruktur (30) eine Sickenstruktur (1112) eingeprägt wird, und die wandartige Struktur (10) vor oder nach dem Einbringen der Sickenstruktur (1112) in mindestens einem selektiv ausgewählten Bereich zumindest abschnittsweise mittels einer Laserlichtquelle gelasert wird, wodurch Material der wandartigen Struktur (10) zumindest abschnittsweise umgeschmolzen und verfestigt wird.

2. Verfahren nach Anspruch 1, **dadurch gekennzeichnet, dass** als Sickenstruktur (1112) Erhebungen (11) und Vertiefungen (12) eingeprägt werden.

3. Verfahren nach Anspruch 2, **dadurch gekennzeichnet, dass** die Sickenstruktur (1112) der Erhebungen (11) und Vertiefungen (12) linienförmig ausgebildet und als Geraden oder als Kurven verlaufend eingebracht werden.

4. Verfahren nach Anspruch 1, **dadurch gekennzeichnet, dass** in die wandartige Struktur (10) mindestens eine Lasernaht (N; 21, 22) oder eine Lasernahtstruktur (20) aus mehreren Lasernähten (N, 21, 22) eingelasert wird.

5. Verfahren nach Anspruch 4, **dadurch gekennzeichnet, dass** die mindestens eine Lasernaht (N; 21, 22) oder die Lasernahtstruktur aus mehreren Lasernähten (N; 21, 22) eingelasert wird, wobei die mindestens eine Lasernaht (N; 21, 22) oder die Lasernahtstruktur aus mehreren Lasernähten (N; 21, 22) linienförmig ausgebildet ist und als Gerade/n oder als Kurve/n verlaufend eingebracht ist.

6. Verfahren nach Anspruch 5, **dadurch gekennzeichnet, dass** die mindestens eine Lasernaht (N; 21, 22) oder die Lasernahtstruktur aus mehreren Lasernähten (N; 21, 22) bezogen auf die Anordnung auf der wandartigen Struktur (10) horizontal und/oder vertikal und/oder bezüglich einer gedachten Horizontalen schräg in der wandartigen Struktur (10) eingelasert wird/werden, wobei die horizontalen und/oder vertikalen und/oder schrägen Lasernähte (N; 21, 22) auf beziehungsweise in horizontal und/oder vertikal und/oder bezüglich der gedachten Horizontalen schräg angeordneten Erhebungen (11) (Sickenerhöhung) und/oder Vertiefungen (12) (Sickenvertiefung) der wandartigen Struktur (10) eingelasert werden.

7. Verfahren nach Anspruch 1, **dadurch gekennzeichnet, dass** die selektive Auswahl der die Festigkeit und/oder die Verspannung der wandartigen Struktur beeinflussenden Bereiche
- in Abhängigkeit der Abmessung und/oder der Wandstärke der wandartigen Struktur und/oder
- in Abhängigkeit der Höhe der Erhebungen (11) (Sickenerhöhungen) und/oder der Tiefe der Vertiefungen (12) (Sickenvertiefungen) und/oder der geometrischen Ausgestaltung der Sickenstruktur (1112) in der wandartigen Struktur und/oder
- in Abhängigkeit der geometrischen Ausbildung der Haltestruktur (30) vorgenommen wird.

8. Wandartige Struktur, **dadurch gekennzeichnet, dass** die wandartige Struktur (10) mit mindestens einer Haltestruktur (30) verschweißt ist und in der eine Sickenstruktur (1112) eingeprägt ist, wobei die wandartige Struktur (10) mindestens abschnittsweise einen Bereich aufweist, der unter Ausbildung mindestens einer Lasernaht (N; 21, 22) oder einer Lasernahtstruktur (20) aus mehreren Lasernähten (N, 21, 22) zumindest abschnittsweise mittels einer Laserlichtquelle gelasert ist, wodurch mindestens abschnittsweise Material der wandartigen Struktur (10) umgeschmolzen und verfestigt ist.

9. Wandartige Struktur nach Anspruch 8, **dadurch gekennzeichnet, dass** die wandartige Struktur (10) mindestens eine Lasernaht (N; 21, 22) oder eine Lasernahtstruktur (20) aufweist.

10. Wandartige Struktur nach Anspruch 9, **dadurch gekennzeichnet, dass** die wandartige Struktur (10) mindestens eine Lasernaht (N; 21, 22), mindestens eine horizontale Lasernaht (21) oder mindestens eine vertikale Lasernaht (22) oder mindestens eine bezüglich der gedachten Horizontalen schräge Lasernaht aufweist.

11. Wandartige Struktur nach Anspruch 9, **dadurch gekennzeichnet, dass** die wandartige Struktur (10) eine Lasernahtstruktur (20) mit horizontal verlaufenden Lasernähten (21) und/oder vertikal verlaufenden Lasernähten (22) und/oder bezüglich der gedachten Horizontalen schräg verlaufenden Lasernähten (N) aufweist.

12. Wandartige Struktur nach Anspruch 8, **dadurch gekennzeichnet, dass** die Sickenstruktur (1121) Erhebungen (11) und Vertiefungen (12) aufweist.

13. Wandartige Struktur nach Anspruch 12, **dadurch gekennzeichnet, dass** die Erhebungen (11) und Vertiefungen (12) aufweisende Sickenstruktur (1112) innerhalb der wandartigen Struktur (10) und die Lasernähte (N; 21, 22) innerhalb der wandartigen Struktur (10) parallel oder in einem vorgebbaren Winkel zueinander angeordnet sind, wobei die Erhebungen (11) und Vertiefungen (12) aufweisende Sickenstruktur (1112) innerhalb der wandartigen Struktur und die Lasernähte (N; 21, 22) vorzugsweise orthogonal zueinander angeordnet sind.

14. Wandartige Struktur nach Anspruch 13, **dadurch gekennzeichnet, dass** die Lasernähte (N; 21, 22) auf den Erhebungen (11) und/oder in den Vertiefungen (12) der wandartigen Struktur angeordnet sind.

15. Wandartige Struktur nach Anspruch 11 und 12, **dadurch gekennzeichnet, dass** die Lasernähte (N; 21, 22) in einem vorgebbaren Winkel, vorzugsweise orthogonal zu den Erhebungen (11) und/oder in den Vertiefungen (12) der wandartigen Struktur (10) angeordnet sind.

16. Rückenlehnenteil (R) und/oder Sitzteil (S) eines Fahrzeugsitzes (F) mit einer wandartigen Struktur nach mindestens einem der Ansprüche 8 bis 15, hergestellt nach dem Verfahren nach mindestens einem der Ansprüche 1 bis 7.

## Claims

1. Method for targeted influencing of the deformation behaviour of a wall-like structure (10), **characterized in that** the wall-like structure (10) is welded to a holding structure (30), wherein a bead structure (1112) is stamped into the wall-like structure (10) before or after the welding to the holding structure (30), and the wall-like structure (10) is lasered, at least in certain portions, by means of a laser light source before or after the introduction of the bead structure (1112) in at least one selectively chosen region, whereby material of the wall-like structure (10) is remelted and solidified, at least in certain portions.

2. Method according to Claim 1, **characterized in that** elevations (11) and depressions (12) are stamped in as the bead structure (1112).

3. Method according to Claim 2, **characterized in that** the bead structure (1112) of the elevations (11) and depressions (12) are formed in a linear manner and introduced running as straight lines or as curves.

4. Method according to Claim 1, **characterized in that** at least one laser weld (N; 21, 22) or a laser weld structure (20) comprising a number of laser welds (N, 21, 22) is lasered into the wall-like structure (10).

5. Method according to Claim 4, **characterized in that** the at least one laser weld (N; 21, 22) or the laser weld structure comprising a number of laser welds (N; 21, 22) is lasered in, wherein the at least one laser weld (N; 21, 22) or the laser weld structure comprising a number of laser welds (N; 21, 22) is formed in a linear manner and is introduced running as a straight line/straight lines or as a curve/curves.

6. Method according to Claim 5, **characterized in that**, with reference to the arrangement on the wall-like structure (10), the at least one laser weld (N; 21, 22) or the laser weld structure comprising a number of laser welds (N; 21, 22) is/are lasered in horizontally and/or vertically and/or obliquely, with respect to an imaginary horizontal line, in the wall-like structure (10), wherein the horizontal and/or vertical and/or oblique laser welds (N; 21, 22) are lasered in on or in elevations (11) (bead elevations) and/or depressions (12) (bead depressions) of the wall-like structure (10) arranged horizontally and/or vertically and/or obliquely with respect to the imaginary horizontal line.

7. Method according to Claim 1, **characterized in that** the selective choice of the regions influencing the strength and/or the tensioning of the wall-like structure is
- based on the dimensions and/or the wall thickness of the wall-like structure and/or
- based on the height of the elevations (11) (bead elevations) and/or the depth of the depressions (12) (bead depressions) and/or the geometrical design of the bead structure (1112) in the wall-like structure and/or
- based on the geometrical form of the holding structure (30).

8. Wall-like structure, **characterized in that** the wall-like structure (10) is welded to at least one holding structure (30) and in which a bead structure (1112) is stamped in, wherein the wall-like structure (10) has, at least in certain portions, a region that is lasered, at least in certain portions, by means of a laser light source to form at least one laser weld (N; 21, 22) or a laser weld structure (20) comprising a number of laser welds (N; 21, 22), wherein, at least in certain portions, material of the wall-like structure (10) is remelted and solidified.

9. Wall-like structure according to Claim 8, **characterized in that** the wall-like structure (10) has at least one laser weld (N; 21, 22) or a laser weld structure (20).

10. Wall-like structure according to Claim 9, **characterized in that** the wall-like structure (10) has at least one laser weld (N; 21, 22), at least one horizontal laser weld (21) or at least one vertical laser weld (22) or at least one oblique laser weld with respect to the imaginary horizontal line.

11. Wall-like structure according to Claim 9, **characterized in that** the wall-like structure (10) has a laser weld structure (20) with horizontally running laser welds (21) and/or vertically running laser welds (22) and/or obliquely running laser welds (N) with respect to the imaginary horizontal line.

12. Wall-like structure according to Claim 8, **characterized in that** the bead structure (1121) has elevations (11) and depressions (12).

13. Wall-like structure according to Claim 12, **characterized in that** the bead structure (1112) having elevations (11) and depressions (12) within the wall-like structure (10) and the laser welds (N; 21, 22) within the wall-like structure (10) are arranged parallel or at a predeterminable angle in relation to one another, wherein the bead structure (1112) having the elevations (11) and depressions (12) within the wall-like structure and the laser welds (N; 21, 22) are preferably arranged orthogonally in relation to one another.

14. Wall-like structure according to Claim 13, **characterized in that** the laser welds (N; 21, 22) are arranged on the elevations (11) and/or in the depressions (12) of the wall-like structure.

15. Wall-like structure according to Claim 11 and 12, **characterized in that** the laser welds (N; 21, 22) are arranged at a predeterminable angle, preferably orthogonally, in relation to the elevations (11) and/or in the depressions (12) of the wall-like structure (10).

16. Backrest part (R) and/or seat part (S) of a vehicle seat (F) with a wall-like structure according to at least one of Claims 8 to 15, produced by the method according to at least one of Claims 1 to 7.

## Revendications

1. Procédé pour influencer de manière appropriée le comportement de déformation d'une structure de type paroi (10), **caractérisé en ce que** l'on soude la structure de type paroi (10) à une structure de maintien (30), dans lequel on imprime une structure de moulures (1112) dans la structure de type paroi (10) avant ou après le soudage à la structure de maintien (30), et on lasérise la structure de type paroi (10) avant ou après l'impression de la structure de moulures (1112) au moins localement dans au moins une région choisie de façon sélective, au moyen d'une source de lumière laser, opération par laquelle la matière de la structure de type paroi (10) est fondue et solidifiée au moins localement.

2. Procédé selon la revendication 1, **caractérisé en ce que** l'on imprime comme structure de moulures (1112) des protubérances (11) et des creux (12).

3. Procédé selon la revendication 2, **caractérisé en ce que** l'on configure la structure de moulures (1112) des protubérances (11) et des creux (12) en forme de lignes et on la réalise suivant un tracé en forme de droites ou de courbes.

4. Procédé selon la revendication 1, **caractérisé en ce que** l'on réalise au laser dans la structure de type paroi (10) au moins une soudure au laser (N; 21, 22) ou une structure de soudures au laser (20) composée de plusieurs soudures au laser (N, 21, 22).

5. Procédé selon la revendication 4, **caractérisé en ce que** l'on réalise au laser ladite au moins une soudure au laser (N; 21, 22) ou la structure de soudures au laser composée de plusieurs soudures au laser (N; 21, 22), dans lequel ladite au moins une soudure au laser (N; 21, 22) ou la structure de soudures au laser composée de plusieurs soudures au laser (N; 21, 22) est configurée en forme de lignes et est réalisée suivant un tracé en forme de droites ou de courbes.

6. Procédé selon la revendication 5, **caractérisé en ce que** l'on réalise au laser dans la structure de type paroi (10) ladite au moins une soudure au laser (N; 21, 22) ou la structure de soudures au laser composée de plusieurs soudures au laser (N; 21, 22) horizontalement et/ou verticalement par rapport à la disposition sur la structure de type paroi (10) et/ou en oblique par rapport à une horizontale imaginaire, dans lequel on réalise au laser les soudures au laser horizontales et/ou verticales et/ou obliques (N; 21, 22) sur ou dans des protubérances (11) (protubérances des moulures) et/ou des creux (12) (creux des moulures) de la structure de type paroi (10) disposées horizontalement et/ou verticalement et/ou en oblique par rapport à l'horizontale imaginaire.

7. Procédé selon la revendication 1, **caractérisé en ce que** l'on effectue le choix sélectif des régions influençant la résistance et/ou la déformation de la structure de type paroi
- en fonction de la dimension et/ou de l'épaisseur de paroi de la structure de type paroi et/ou
- en fonction de la hauteur des protubérances (11) protubérances des moulures) et/ou de la profondeur des creux (12) (creux des moulures) et/ou de la configuration géométrique de la structure de moulures (1112) dans la structure de type paroi et/ou
- en fonction de la forme géométrique de la structure de maintien (30).

8. Structure de type paroi, **caractérisée en ce que** la structure de type paroi (10) est soudée à au moins une structure de maintien (30) et dans laquelle une structure de moulures (1112) est imprimée, dans laquelle la structure de type paroi (10) présente au moins localement une région, qui est lasérisée au moins localement au moyen d'une source de lumière laser avec formation d'au moins une soudure au laser (N; 21, 22) ou d'une structure de soudures au laser (20) composée de plusieurs soudures au laser (N, 21, 22), opération par laquelle la matière de la structure de type paroi (10) est au moins localement fondue et solidifiée.

9. Structure de type paroi selon la revendication 8, **caractérisée en ce que** la structure de type paroi (10) présente au moins une soudure au laser (N; 21, 22) ou une structure de soudures au laser (20).

10. Structure de type paroi selon la revendication 9, **caractérisée en ce que** la structure de type paroi (10) présente au moins une soudure au laser (N; 21, 22), au moins une soudure au laser horizontale (21) ou au moins une soudure au laser verticale (22) ou au moins une soudure au laser oblique par rapport à l'horizontale imaginaire.

11. Structure de type paroi selon la revendication 9, **caractérisée en ce que** la structure de type paroi (10) présente une structure de soudures au laser (20) avec des soudures au laser orientées horizontalement (21) et/ou des soudures au laser orientées verticalement (22) et/ou des soudures au laser orientées en oblique par rapport à l'horizontale imaginaire (N).

12. Structure de type paroi selon la revendication 8, **caractérisée en ce que** la structure de moulures (1121) présente des protubérances (11) et des creux (12).

13. Structure de type paroi selon la revendication 12, **caractérisée en ce que** la structure de moulures (1112) présentant des protubérances (11) et des creux (12) est disposée à l'intérieur de la structure de type paroi (10) et les soudures au laser (N; 21, 22) sont disposées à l'intérieur de la structure de type paroi (10) parallèlement ou avec un angle prédéterminable l'une par rapport à l'autre, dans laquelle la structure de moulures (1112) présentant des protubérances (11) et des creux (12) est disposée à l'intérieur de la structure de type paroi et les soudures au laser (N; 21, 22) sont disposées de préférence orthogonalement l'une par rapport à l'autre.

14. Structure de type paroi selon la revendication 13, **caractérisée en ce que** les soudures au laser (N; 21, 22) sont disposées sur les protubérances (11) et/ou dans les creux (12) de la structure de type paroi.

15. Structure de type paroi selon la revendication 11 et 12, **caractérisée en ce que** les soudures au laser (N; 21, 22) sont disposées avec un angle prédéterminable, de préférence orthogonalement aux protubérances (11) et/ou dans les creux (12) de la structure de type paroi (10).

16. Partie de dossier (R) et/ou partie de siège (S) d'un siège de véhicule (F) avec une structure de type paroi selon au moins une des revendications 8 à 15, fabriquée par le procédé selon au moins une des revendications 1 à 7.
